# EUROPEAN PATENT APPLICATION

(11) **EP 2 690 627 A1**
(43) Date of publication of application: **29.01.2014**
(21) Application number: 12760437.9
(22) Date of filing: 29.02.2012
(51) Int. Cl.: G11B 27/10, G11B 20/10, H04N 5/76, H04N 5/85, H04N 5/93

(54) **DISK PLAYBACK DEVICE, DISK PLAYBACK METHOD, AND PROGRAM**

(30) Priority: 22.03.2011 JP 2011063058
(71) Applicant: Panasonic Corporation, Osaka 571-8501 (JP)
(72) Inventor: HIRAMATSU, Yoshinori, Chuo-ku Osaka 540-6207 (JP); TAKEUCHI, Tatsuya, Chuo-ku Osaka 540-6207 (JP); TASAKI, Koichi, Chuo-ku Osaka 540-6207 (JP)
(74) Representative: Grünecker, Kinkeldey, Stockmair & Schwanhäusser
(86) International application number: PCT/JP2012/001366
(87) International publication number: WO 2012/127788

(57) **Abstract**

A reproduction control unit (17) starts to monitor a reproduction state of a title being reproduced by a reproduction unit (16). If a specific navigation command added to the title being reproduced is executed, the reproduction state at a timing of the execution of this command is stored into a local storage (13). Moreover, the reproduction control unit (17) determines whether or not the title being reproduced by the reproduction unit (16) is an HDMV movie title, and in the case of the HDMV movie title, the reproduction control unit (17) stores its reproduction state into the local storage (13). Resume reproduction depending on a reproduction target title is performed based on the reproduction state associated with the execution of the above specific navigation command and register information on the HDMV movie title.

## Description

### [Technical Field]

The present invention relates to a disc reproduction apparatus that reproduces data recorded on a recording medium such as a BD-ROM (Blu-ray-Disc-Read-Only-Memory).

### [Background Art]

In recent years, optical disc reproduction apparatuses that have highly interactive functions with high image quality and high sound quality, and reproduce optical discs having high-capacity information recorded thereon have been widely popularized even to standard homes.

A representative high-capacity optical disc is a Blu-ray Disc: BD (hereinafter referred to as "BD."). The BD includes a vast data capacity of 25 Giga Bytes (GB) with a single layer, or 50 GB with a double layer, and can accumulate movie content with high-definition image quality. Data is written into commercially available or rental packaged software using this BD, in a manufacturing process, and the packaged software is provided via a BD-ROM that is unrecordable or non-rewritable read only medium.

Two specifications of an HDMV mode and a BD-J mode have been formulated for this BD-ROM. In the HDMV mode, image/sound codec specifications have been extended relative to conventional DVD-ROMs, and high-definition images and high-quality audio can be used. It should be noted that its content specification is similar to the DVD-ROM. The BD-J mode can add visual representation, such as superimposing images, according to a Java (R) application, in addition to the HDMV mode.

HDMV titles are classified into movie titles and interactive titles. The movie title is a title to be sequentially reproduced from the beginning to the end of the title. In contrast, the interactive title is not the title to be sequentially reproduced from the beginning to the end of the title, as represented by a menu title. Hence, there is no concept of "chapter" in the interactive title, and many devices do not notify a user of even reproduction time information.

Incidentally, in such a case where the disc reproduction apparatus is used in a car, a power supply is relatively frequently turned ON/OFF. For example, there is such a frequent scene where an engine is stopped for a break or the like during a drive with BD-J content being reproduced, and the engine is restarted later. Since an ACC (ACCessory) power supply is turned OFF when the engine is stopped, and the ACC power supply is turned ON when the engine is started, reproduction by an in-car reproduction apparatus is paused each time, and the in-car reproduction apparatus is generally provided with a function of restarting the reproduction from a position of the reproduction before the power supply OFF if the power supply is turned ON again (resume reproduction function). For example, Patent Literature 1 (Publication of Japanese Patent Laid-Open No. 2010-33628) discloses a technique in which, in reproduction of a title with reference to a Java application on a BD-ROM, even if reproduction of images and sounds is paused at any point, resume reproduction of the images and the sounds from a position of the pause can be realized when the reproduction is restarted.

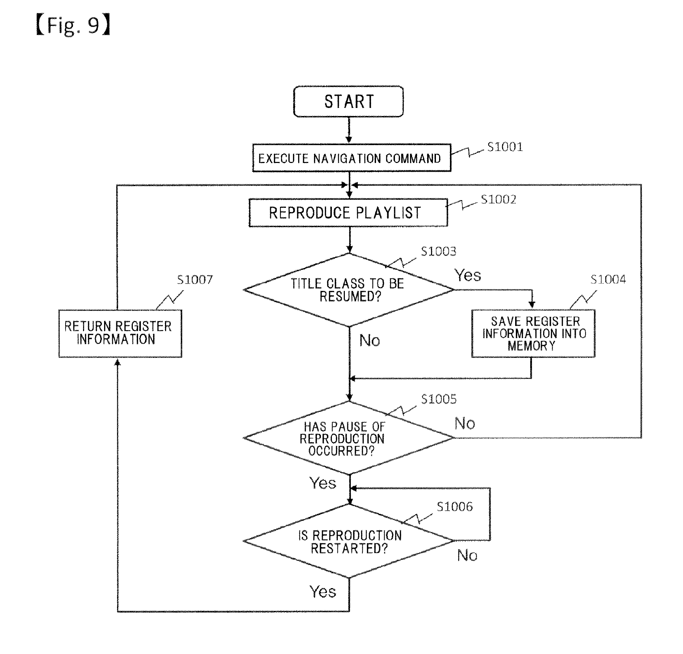

Figure 9 is a diagram for describing a sequence example of the resume reproduction under an in-car environment, as a conventional art. First, when a navigation command as a scenario for reproducing a title, which has been written as management information in a disc, is executed (S1001), reproduction of a playlist (moving image reproduction) is started (S1002).

A signal processing unit provided in the disc reproduction apparatus determines whether or not the playlist being reproduced is a resume target title class (S1003), and if the signal processing unit determines that the playlist is the resume target title class (S1003; Yes), the signal processing unit saves current register information (reproduction information) into a nonvolatile memory (S1004). It should be noted that saving this register information into the nonvolatile memory is periodically performed at predetermined time intervals.

The signal processing unit determines whether or not there is occurrence of a pause of the reproduction of the playlist (S1005), and if the signal processing unit determines that the pause of the reproduction has not occurred (S1005: No), the signal processing unit returns to step S1002 to continue the reproduction of the playlist. In contrast, if it is determined that the pause of the reproduction has occurred (S1005: Yes), it is determined whether or not there is an instruction to restart the reproduction of the playlist (S1006).

If the instruction to restart the reproduction of the playlist is issued by a user operation through remote control input or the like (S1006), the register information saved in the nonvolatile memory in step S1004 is returned to a register (S1007), and the reproduction of this playlist is restarted from a position before the pause of the reproduction of the playlist occurs.

It should be noted that since it is technically difficult to perform the resume reproduction of a BD-J title, a process of determining the resume target title class (S1003) is provided for convenience, in the sequence example illustrated in Figure 9. In contrast, if the resume reproduction is enabled not only for the HDMV title but also for the BD-J title, the register information may be always saved into the nonvolatile memory without performing this process of determining the title class.

Moreover, in such a case where the disc reproduction apparatus automatically restarts the reproduction without depending on the user operation after the pause of the reproduction has occurred, a process of determining whether or not there is the instruction to restart the reproduction in step S1006 is not required.

Furthermore, in the sequence example illustrated in Figure 9, the register information is to be periodically saved into the nonvolatile memory (S1004). If it is assumed that power is constantly supplied as in a disc reproduction apparatus for home use or the like, the register information, however, may be saved into the nonvolatile memory only at a time point when the pause of the reproduction has occurred.

### [Citation List]

### [Patent Literature]

[Patent Literature 1]
   Publication of Japanese Patent Laid-Open No. 2010-33628
[Patent Literature 2]
   Publication of WO2009/057298A1

### [Summary of Invention]

### [Technical Problem]

Problems to be described below, however, occur if the resume reproduction of the HDMV interactive title is tried in the sequence as described above.

As described above, the HDMV titles are classified into the movie titles and the interactive titles. The HDMV movie title, which is to be sequentially reproduced from the beginning to the end of the title, can be reproduced from the same position as a position at a time of stop of the reproduction, even if the resume reproduction is performed based on register information at the time of the stop of the reproduction.

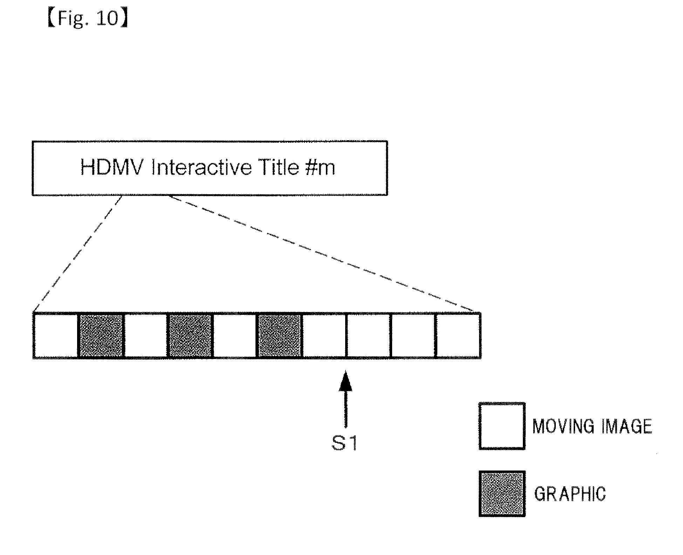

In contrast, as illustrated in Figure 10, the HDMV interactive title, which is not to be reproduced from the beginning to the end of the title, may take a configuration including moving image data packets and graphic data packets that are nested, as in the case where a menu in which a button and the like exist is realized during the moving image reproduction. In this case, the menu is not correctly displayed unless data is composed from the beginning packet of a graphic in order to draw the graphic.

Specifically, if it is assumed that the reproduction has stopped at a time point denoted by S1 in Figure 10, the reproduction is in a state where the graphic is displayed, at the time of the stop. If the resume reproduction of this is performed according to the above conventional sequence, the reproduction is restarted from S1. At the time point of S1, however, the data packets for the graphic displayed at the time of the stop no longer exist, and thus this graphic cannot be displayed. In other words, the reproduction is restarted without the graphic being displayed. If this HDMV interactive title is assumed to be for a top menu, the graphic is not displayed after the resume reproduction, the user cannot perform operations from the top menu, and the reproduction may be continued without an appearance of the top menu.

Of course, inconvenience as described above is eliminated by also saving graphic information into the nonvolatile memory. The graphic information, however, has a large data volume, and hence, it is not realistic to include this function into the disc reproduction apparatus having a limited memory capacity.

The present invention has been accomplished in order to solve such problems, and an object of the present invention is to provide a disc reproduction technique that does not cause the inconvenience such as the graphic not being displayed, even if the resume reproduction of the HDMV interactive title on the BD-ROM is performed.

### [Solution to Problem]

In order to solve the above described problems, a disc reproduction apparatus according to the present invention is a disc reproduction apparatus that reproduces a disc having multiple titles recorded thereon, the title being a unit of the reproduction, the apparatus including a signal processing unit that obtains various data recorded on the disc, and performs signal processing for the various data; a reproduction unit that reproduces any of the multiple titles, from a reproduction start position indicated by the signal processing unit; and a nonvolatile storage unit that stores information identifying the reproduction start position, wherein the signal processing unit includes a user operation unit that issues instructions to start the reproduction and pause the reproduction of each of the multiple titles, according to a user operation; and a reproduction control unit that, each time a specific navigation command added to the title being reproduced by the reproduction unit is executed, sequentially stores a reproduction state at a timing of the execution of the command, into the nonvolatile storage unit, as executed command identification information, and also, if the title being reproduced by the reproduction unit is an HDMV movie title, sequentially stores a reproduction state of the HDMV movie title into the nonvolatile storage unit, as reproduction state information, and wherein the reproduction control unit receives an instruction to restart the reproduction, from the user operation unit, and determines whether the information stored in the nonvolatile storage unit is the executed command identification information on the specific navigation command or the reproduction state information on the HDMV movie title; in a case of the reproduction state information, identifies the reproduction start position by the reproduction state information, and instructs the reproduction unit to start resume reproduction; and in a case of the executed command identification information, identifies the reproduction start position by the executed command identification information, and instructs the reproduction unit to start the resume reproduction.

### [Advantageous Effects of Invention]

According to the present invention, the inconvenience with the resume reproduction of the HDMV interactive title on the BD-ROM, such as the graphic not being displayed, is eliminated. The present invention is particular effective in the reproduction in an in-car environment with frequent power supply ON/OFF.

### [Brief Description of Drawings]

[Figure 1] Figure 1 is a block diagram for describing a configuration example of a disc reproduction apparatus according to an embodiment of the present invention.
[Figure 2] Figure 2 is a diagram illustrating a relationship between an index.bdmv file and titles.
[Figure 3] Figure 3 is a diagram illustrating an example of a configuration diagram of HDMV titles.
[Figure 4] Figure 4 is a diagram illustrating a configuration example of Title #n.
[Figure 5A] Figure 5A is a flowchart for describing content of a process of saving resume information to be executed by a signal processing unit in a first implementation of the present invention.
[Figure 5B] Figure 5B is a flowchart for describing content of a resume reproduction procedure to be executed by the signal processing unit in the first implementation of the present invention.
[Figure 6A] Figure 6A is a diagram illustrating a situation where a pause of reproduction has occurred at a position of S2 in PlayList #n.
[Figure 6B] Figure 6B is a diagram illustrating a configuration of data packets of PlayList #n.
[Figure 7] Figure 7 is a flowchart for describing content of the process of saving the resume information to be executed by the signal processing unit in a second implementation of the present invention.
[Figure 8] Figure 8 is a flowchart for describing content of the process of saving the resume information to be executed by the signal processing unit in a third implementation of the present invention.
[Figure 9] Figure 9 is a diagram for describing a sequence example of resume reproduction under an in-car environment, as a conventional art.
[Figure 10] Figure 10 is a diagram describing a state where moving image data packets and graphic data packets are nested in an HDMV interactive title.

### [Description of Embodiment]

An embodiment for practicing the present invention will be described below with reference to the drawings. It should be noted that a term "resume reproduction" to be used in the following description is used as a meaning also including a case of restarting reproduction from a position as close to a position at a time of a pause of the reproduction as possible, in addition to the resume reproduction in a restricted sense, which means that the reproduction is restarted from the position at the time of the pause of the reproduction.

### [Implementation 1]

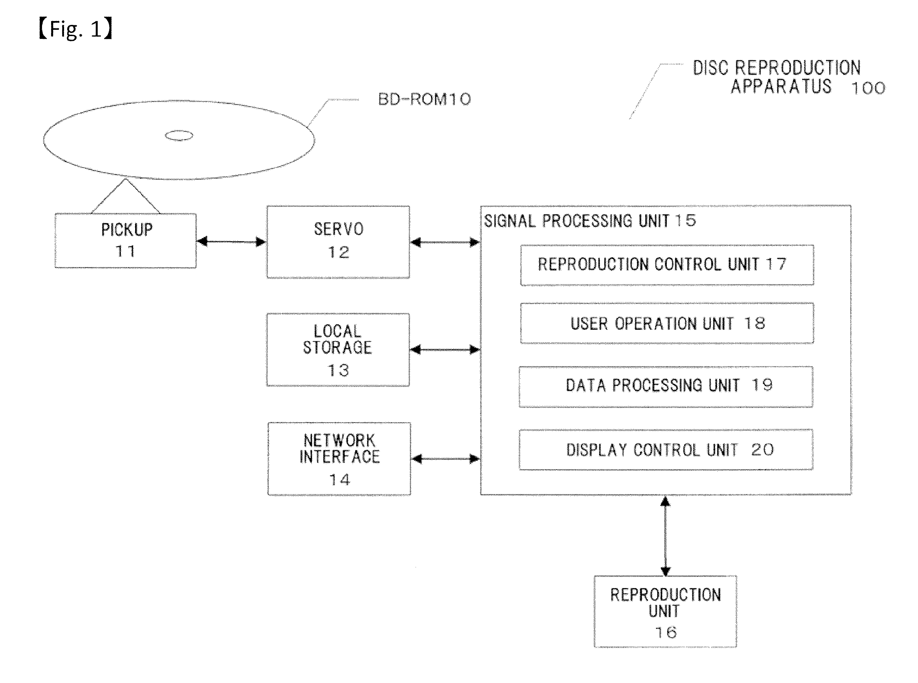

Figure 1 is a block diagram for describing a configuration example of a disc reproduction apparatus 100 according to an embodiment of the present invention. The disc reproduction apparatus 100 is configured with a pickup 11 that obtains data from a BD-ROM 10, a servo 12 that controls the pickup 11, a local storage 13 that is a nonvolatile storage unit, a network interface 14, a signal processing unit 15 and a reproduction unit 16. Moreover, the signal processing unit 15 is provided with a reproduction control unit 17, a user operation unit 18, a data processing unit 19 and a display control unit 20.

The BD-ROM 10 illustrated in Figure 1 is a recording medium having multiple titles, each of which is a unit of reproduction, recorded thereon, and AV content, such as movie works and live images, has been recorded thereon.

The servo 12 is a device that causes the pickup 11 to move (seek) in a radial direction of the recording medium, and adjusts moving (focus) of the pickup 11 in an axial direction of the recording medium. In addition, the pickup 11 obtains desired data from the BD-ROM 10, and sends the data to the signal processing unit 15.

The signal processing unit 15 obtains various data recorded on the BD-ROM 10, and executes signal processing for the various data. Moreover, the signal processing unit 15 receives content of a user operation, determines whether or not the operation is acceptable, and causes the user operation unit 18 to execute the operation if the operation is acceptable. Moreover, generally, in most cases, if reproduction of a menu screen has been set to be performed immediately after a disc is inserted, a button for reproducing a main story of a movie or the like has been previously selected at a time point when the menu screen has been reproduced. In this case, if a user operation for the button selected at the time point when the menu screen has been reproduced is executed to shift to the next state, the main story is reproduced.

Data to be processed by the signal processing unit 15 is not only on the BD-ROM 10, and also includes data saved in the local storage 13 and data downloaded from a network via the network interface 14. The signal processing unit 15 is means for processing such data by the data processing unit 19, and enabling the reproduction unit 16 to reproduce the AV content and the like via the display control unit 20.

The reproduction unit 16 has a function of converting the data processed by the above signal processing unit 15, into a state of being reproducible by a television or the like to be described later. This reproduction unit 16 performs the resume reproduction of any of the multiple titles recorded on the BD-ROM 10, from a reproduction start position indicated by the signal processing unit 15, according to a procedure to be described later.

The reproduction control unit 17 provided in the signal processing unit 15 controls normal reproduction of the AV content and the like based on the above various data, and in addition, if reproduction of various titles on the BD-ROM has been stopped and then the reproduction is started again, the reproduction control unit 17 controls from which position the resume reproduction of a reproduction target title is performed.

Prior to a description of specific content of processes to be executed in the implementation of the present invention, a relationship between an index.bdmv file, which is management information regarding the entire BD-ROM 10, and the titles, as well as a configuration example of HDMV titles will be previously described.

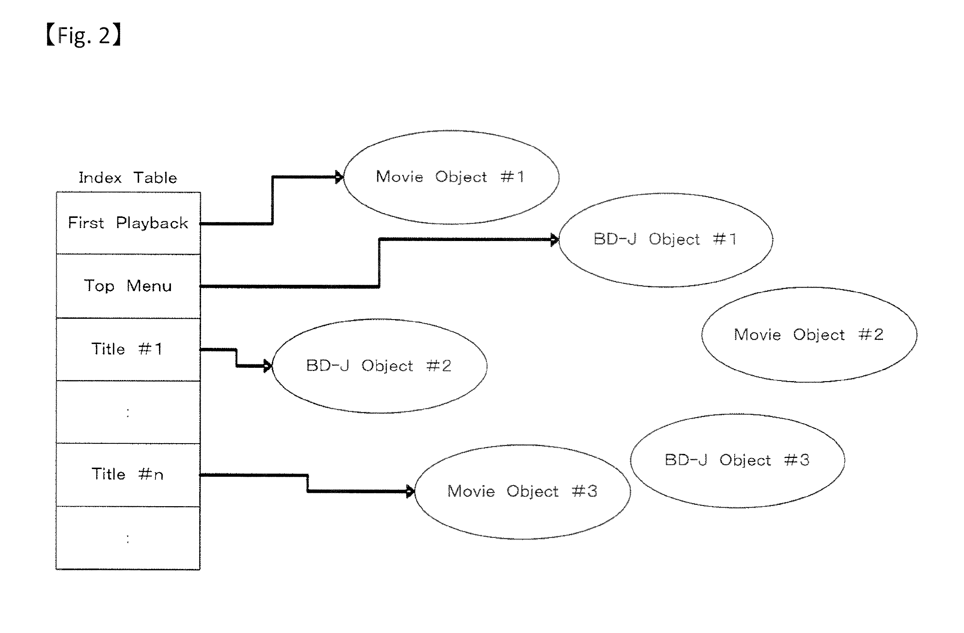

Figure 2 is a diagram illustrating the relationship between the index.bdmv file and the titles. The title is the unit of the reproduction including a pair of an application and an AV stream. In the index.bdmv file, a title configuration on the disc has been described, and a reference relationship between each title on the disc and a corresponding application (a Java (R) application for a BD-J mode title, or a scenario program for an HDMV mode title) is managed. Moreover, there are "First Playback Title" and "Top Menu" as special titles. "First Playback" is a title to be automatically reproduced first when the BD is started. It should be noted that the first play is a title to be reproduced before the reproduction of the main story or display of a menu, including First Playback. It should be noted that a location of the title to be reproduced as the first play may also be described in First Playback. The first play is mainly used for displaying terms of use of the BD and the like. "Top Menu" is reproduced when a menu key on a remote control is depressed or when the reproduction of the title ends, and is mainly used for selecting the title and selecting a language for subtitles and sounds.

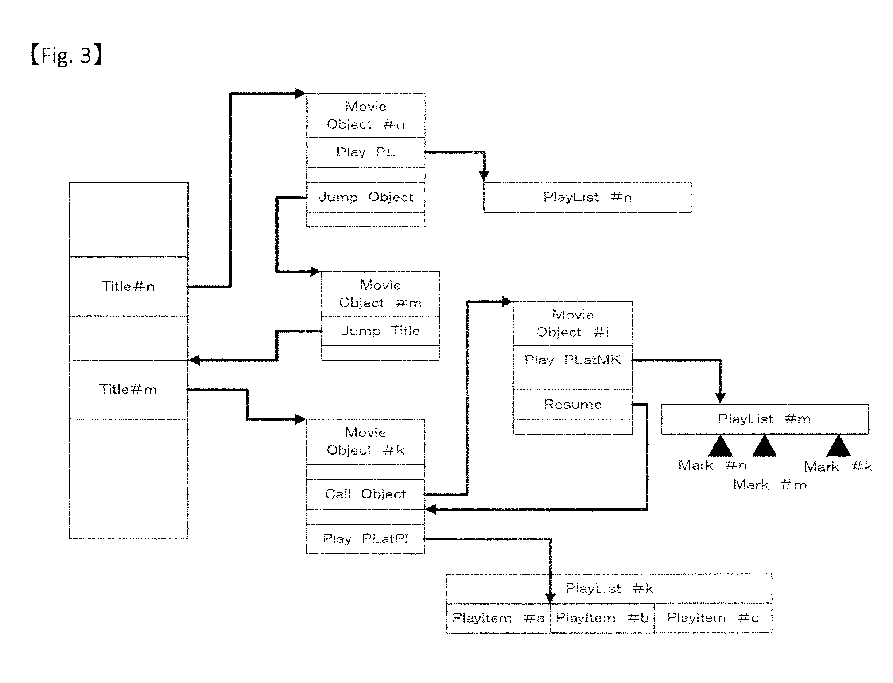

Figure 3 is a diagram illustrating an example of a configuration diagram of the HDMV titles.

As illustrated in Figure 2, in the case of the HDMV title, each title refers to MovieObject. Navigation Commands corresponding to each MovieObject have been recorded in MovieObject. The Navigation Commands are sequentially executed from the beginning of each MovieObject, and reproduction of a scenario can be realized by the Navigation Commands. Moreover, the Navigation Commands also include commands for comparing and calculating values in a register provided in the reproduction apparatus, and a playlist, a title and a number of MovieObject to be reproduced are determined by these commands.

As illustrated in Figure 3, Title #n refers to MovieObject #n. MovieObject #n reproduces PlayList #n according to a Navigation Command of Play PL. When the reproduction of PlayList #n ends, the next Navigation Command is sequentially executed, and the execution transits to MovieObject #m according to a Jump Object command.

A Jump Title command exists in MovieObject #m, and when this command is executed, the execution moves to Title #m.

Title #m refers to MovieObject #k. A Call Object command exists in MovieObject #k. Unlike the Jump Object command, the Call Object command retains a current state, and returns to the state when a Resume command is executed. The execution transits to MovieObject #i according to the Call Object command in MovieObject #k.

A Play PLatMK command is executed in MovieObject #i, and this command enables reproduction from Mark #n registered in PlayList #m. This mark includes a commonly-termed "chapter."

When the reproduction of PlayList #m is completed, the Resume command is executed in MovieObject #i. As described above, the Resume command returns to the state retained at a timing when the Call Object command or a Call Title command is executed, that is, in the example illustrated in Figure 3, returns to a state after the Call Object command in MovieObject #k is executed.

Lastly, Play PLatPI is executed in MovieObject #k. In the example, this command is for performing the reproduction from the beginning of Playltem #b constituting PlayList #k.

Playltem is an element constituting PlayList, and is an element managing from where to where in which clip the reproduction is performed.

As illustrated in Figure 3, the HDMV titles execute the Navigation Commands in each MovieObject to realize moving image reproduction, title transition and the like.

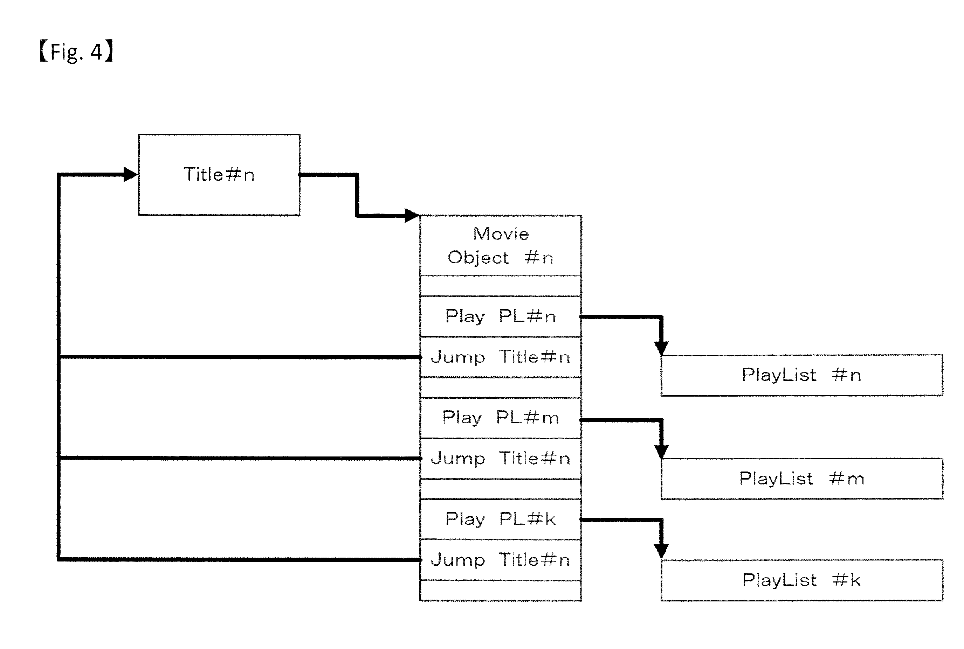

Figure 4 is a diagram illustrating a configuration example of Title #n. Title #n is composed of MovieObject #n, and PlayLists #n, #m and #k can be reproduced according to the Navigation Commands. Moreover, MovieObject #n has such a configuration of looping its own title according to a Navigation Command of Jump Title #n.

Which PlayList is reproduced has been determined by the values in the register in the reproduction apparatus and the comparison and calculation according to the Navigation Commands in MovieObject #n.

As described above, for an HDMV interactive title, if a power supply is turned OFF during the reproduction and the resume reproduction is performed, the Navigation Commands are executed from the beginning of Title #n, that is, the beginning of MovieObject #n.

If the power supply has been turned OFF during the reproduction of PlayList #n, when Title #n is reproduced with the resume reproduction, the register in the reproduction apparatus has been cleared, or only data of PlayList #n being reproduced before the power supply is turned OFF can be referred to.

In such a case where Title #n is only reachable if another title has been reproduced, various information may have been saved in the register in the reproduction apparatus before Title #n is reproduced. Accordingly, if Title #n is directly reproduced, incorrect operations may be performed such as reproduction of Title #n from incorrect register information, or a graphic, which should be displayed, not being displayed.

According to the present invention, inconvenience as described above, which may be caused in the resume reproduction of the title on the BD-ROM, can be avoided. The specific content of the processes to be executed in the present implementation will be described below.

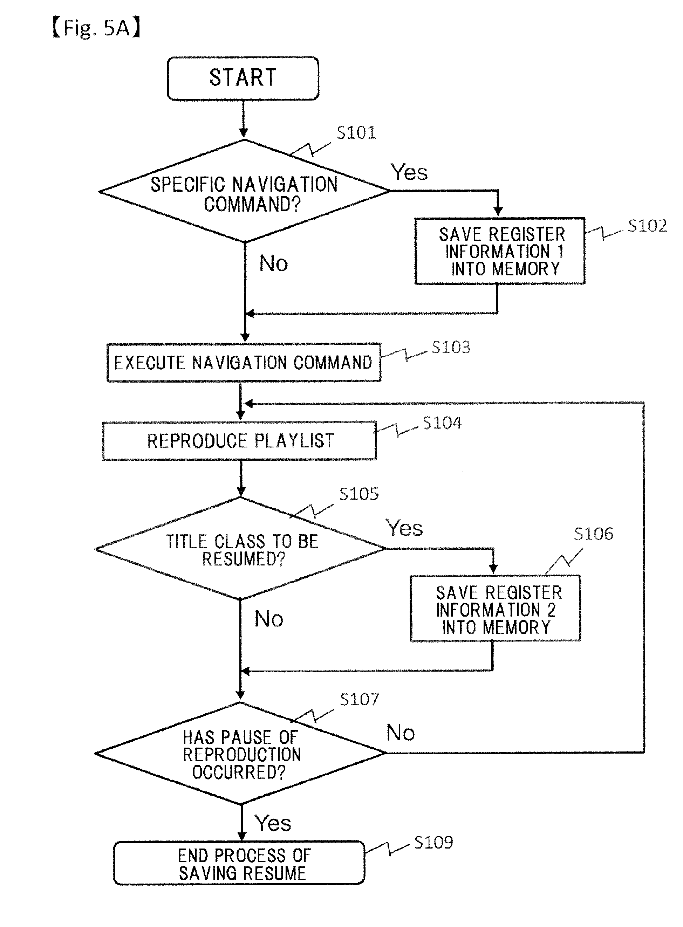

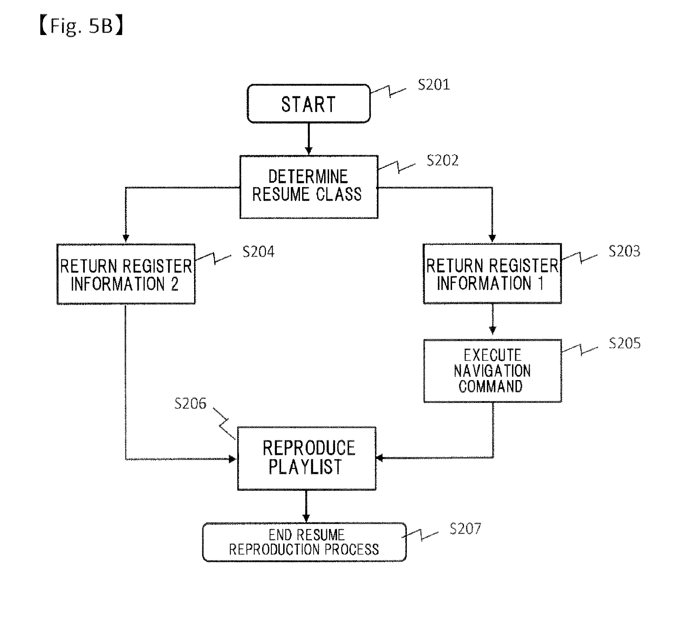

Figure 5A and Figure 5B are flowcharts for describing content of processes to be executed by the signal processing unit 15 in the first implementation of the present invention. Figure 5A is a flowchart for describing content of a process of saving resume information, and Figure 5B is a flowchart for describing content of a resume reproduction procedure.

First, with reference to Figure 5A, the content of the process of saving the resume information will be described. If the reproduction of the BD-ROM 10 is started by the disc reproduction apparatus 100, the reproduction control unit 17 provided in the signal processing unit 15 starts to monitor a reproduction state of the title being reproduced by the reproduction unit 16. If a specific Navigation Command added to the title being reproduced is executed (S101: Yes), the reproduction control unit 17 stores the reproduction state at a timing of the execution of this command (register information 1 in the figure), into the local storage 13 (S102). The reproduction state associated with the execution of this specific Navigation Command (the register information 1) is used as executed command identification information to be described later.

The Navigation Command is a scenario for reproducing a title, and is recorded in the management information on the disc. If the reproduction of the title is started, this Navigation Command is executed, and a reproduction position is determined according to the scenario. Moreover, when the reproduction ends, the rest of the scenario is read to determine what to do next, such as whether to transit to another title.

In the present embodiment, each of commands of Jump Title, Call Title, Resume, Play PL, Play PLatPI, Play PLatMK, Link PI and Link MK, in such Navigation Commands, is defined (specified) as the above "specific Navigation Command."

Jump Title is an operation of shifting from the title being reproduced to reproduction of a specific title.

Call Title is an operation of calling the reproduction of the specific title from the title being reproduced.

Resume is an operation of restarting the reproduction of the title.

Play PL is an operation of reproducing a specific playlist.

Play PLatPI is an operation of reproducing a specific playitem in the specific playlist.

Play PLatMK is an operation of reproducing a specific mark (commonly-termed "chapter") in the specific playlist.

Link PI is an operation of reproducing a specific playitem in a playlist being reproduced.

Link MK is an operation of reproducing a specific mark (commonly-termed "chapter") in the playlist being reproduced.

It should be noted that all the Navigation Commands illustrated above do not necessarily need to be specified as "specific Navigation Command," and for example, only Jump Title may be specified as "specific Navigation Command," and each following process may be executed.

In step S103, the specific Navigation Command determined in step S101 is executed, and when this Navigation Command is executed (S103), reproduction of a corresponding playlist is started along the scenario of the reproduction target title (S104).

The reproduction control unit 17 determines a class of the title being reproduced by the reproduction unit 16 (S105). This title is a title whose resume reproduction is to be performed after a pause of the reproduction. If this title is an HDMV movie title (S105: Yes), its reproduction state (register information 2 in the figure) is stored into the local storage 13 (S106). This register information 2 is used as reproduction state information to be described later.

The above collection of the reproduction state information is repeated while the reproduction of the title is continued (S107: No).

If the pause of the reproduction of the title occurs due to a situation of the user operation or the like (S107: Yes), the reproduction control unit 17 saves the above register information 1 or the register information 2 as the resume information (S109).

Next, the content of the resume reproduction procedure will be described with reference to Figure 5B. The user operation unit 18 has accepted instructions to start the reproduction of the title and to pause the reproduction, according to the user operation, and a resume reproduction process is started according to an instruction to restart the reproduction, from the user operation unit 18 (S201). If the resume reproduction process is started, it is discriminated whether the register information stored in the local storage 13 is data saved in step S102 (the register information 1) or data saved in step S106 (the register information 2) (S202). It should be noted that while the above process is a process in the case where only one of the register information 1 and 2 to be saved into the local storage 13 can be saved, the user may be caused to perform a process such as selection if both the register information 1 and 2 are saved into the local storage 13.

As a result of determination of a resume class in step S202, if the register information stored in the local storage 13 is the register information 2, the register information 2 (the reproduction state information) memorized in the local storage 13 is returned (S204), the reproduction start position is identified by this register information 2 and the reproduction of the playlist by the reproduction unit 16 is started (S206), and the resume reproduction process is ended (S207).

In contrast, as a result of the determination of the resume class in step S202, if the register information stored in the local storage 13 is the register information 1, the register information 1 (the executed command identification information) memorized in the local storage 13 is returned (S203), the command determined to be the specific Navigation Command in step S101 is executed (step S205), the reproduction start position is identified by this register information 1 and the reproduction of the playlist by the reproduction unit 16 is started (S206), and the resume reproduction process is ended (S207).

As described above, in a conventional approach, the resume reproduction of the title is executed based only on the register information at the time of the pause of the reproduction of the title. Thereby, in the resume reproduction started after the pause of the reproduction of the HDMV interactive title that is not to be reproduced from the beginning to the end of the title, for example, there may be inconvenience in that the reproduction is restarted from the position of S1 in Figure 10 and thus a graphic, which has been displayed at the time of the pause of the reproduction, is not displayed.

In contrast, in the procedures illustrated in Figure 5A and Figure 5B, different register information is used for the resume reproduction of the title, depending on the class of the title. Specifically, for the resume reproduction of the HDMV interactive title, the register information at a timing when the Navigation Command, which is the scenario for reproducing the title, has been executed is used, instead of the register information at the time of the pause of the reproduction of the title. Thereby, even in such a case illustrated in Figure 10, the restart of the reproduction from the position of S1 is avoided, and there is not the inconvenience in that the graphic, which has been displayed at the time of the pause of the reproduction, is not displayed.

It should be noted that if the title whose reproduction is restarted according to the instruction from the user operation unit 18 is the HDMV interactive title, the inconvenience may also not be caused even when the reproduction is restarted from the position at the time of the pause of the reproduction.

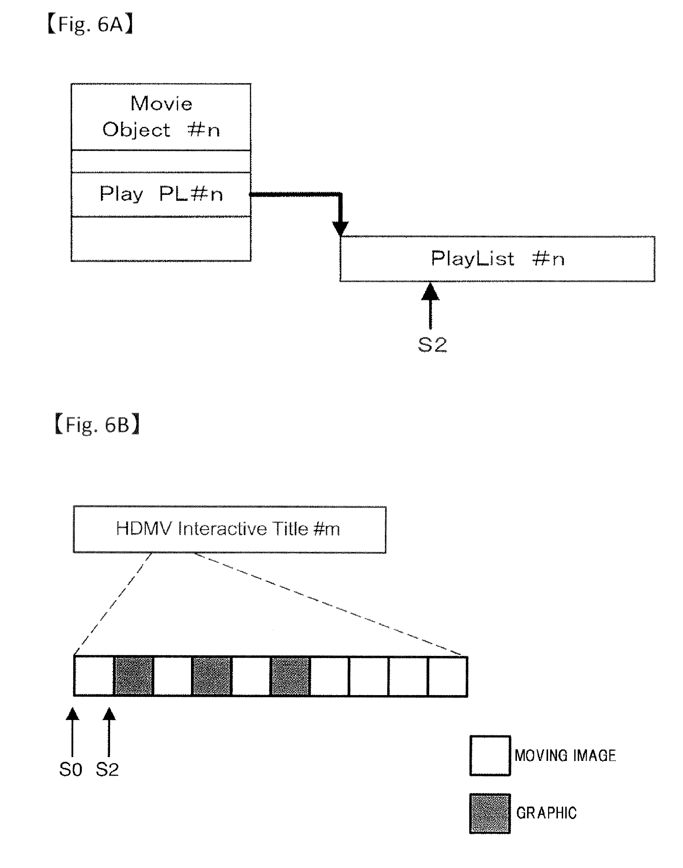

For example, as illustrated in Figure 6A, it is assumed that the pause of the reproduction has occurred at a position of S2 of PlayList #n of the HDMV interactive title. In addition, if it is assumed that a data packet configuration of this PlayList #n is as illustrated in Figure 6B, no graphic data packet exists before S2 of PlayList #n. In such a case, the inconvenience such as the graphic not being displayed is not caused even if the reproduction is restarted from the position of S2. Hence, it can also be said to be unnecessary to take the trouble to restart the reproduction from the beginning (S0) of this playlist.

Accordingly, time search may be executed to a position of a leading graphic data packet (from S0 to S2) in the playlist of the title whose reproduction start position has been identified by the executed command identification information, and for which the reproduction unit 16 has been instructed to start the resume reproduction. Moreover, in an HDMV interactive title in which no graphic exists, time information A on the current reproduction is saved into the local storage 13 in step S106 of Figure 5A. If the resume reproduction is performed, the register information 2, the Navigation Command are executed, and then the time search is performed to the time information A saved in the local storage 13. Thereby, the reproduction is enabled from an original position before the stop of the reproduction.

### [Second Implementation]

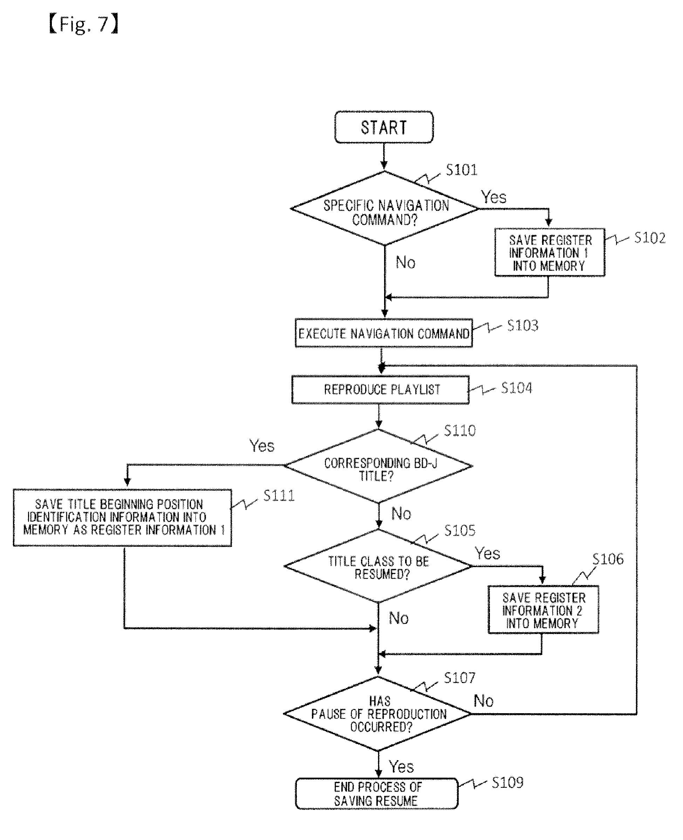

Figure 7 is a flowchart for describing content of the process of saving the resume information to be executed by the signal processing unit, in a second implementation of the present invention. It should be noted that, also in the present implementation, the content of the resume reproduction procedure to be executed by the signal processing unit is similar to the content that has already been described using Figure 5B.

The flow illustrated in Figure 7 is different from the flow illustrated in Figure 5A described in the first embodiment, in that the flow illustrated in Figure 7 includes a step (S110) of discriminating whether the title to be reproduced by the reproduction unit 16 is the HDMV title or the BD-J title, and further determining whether or not the title whose reproduction is restarted is the BD-J title and the reproduction of this BD-J title is due to transition from the HDMV title; and a step (S111) of, if the above requirement has been satisfied by this determination (S110: Yes), storing a reproduction state at a timing of executing a title transit command added to the HDMV title that is a transition source (the register information 1), into the local storage 13, as the executed command identification information.

The above title transit command is, specifically, the commands of Jump Title and Call Title. According to the executed command identification information (the register information 1) stored in the local storage 13 in step S111, the beginning position of the BD-J title for which the reproduction of the title is restarted is identified as the reproduction start position, and the instruction to start the resume reproduction by the reproduction unit 16 is issued.

In the conventional art, in the case of the transition from the HDMV title to the BD-J title, it is technically difficult to perform a resume reproduction function for the BD-J title. However, if the restart is to be processed based on the above flow of reproducing the BD-J title by using the title transit command added to the HDMV title that is the transition source, the restart of the resume reproduction from the beginning of the BD-J title is enabled, and the restart of the reproduction from proximity of the reproduction performed by the user is enabled even for the BD-J title whose resume reproduction is difficult.

### [Third Implementation]

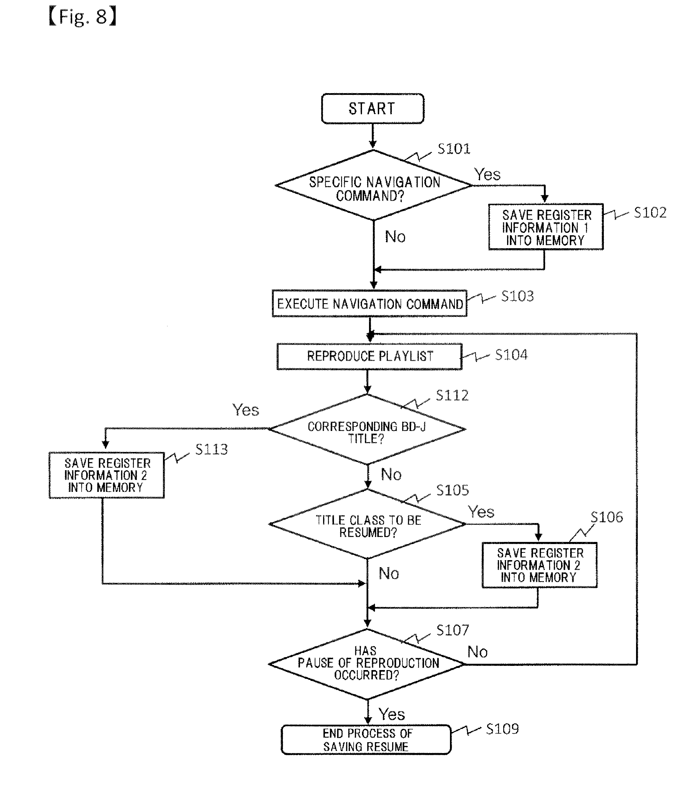

Figure 8 is a flowchart for describing content of the process of saving the resume information to be executed by the signal processing unit, in a third implementation of the present invention. It should be noted that, also in the present implementation, the content of the resume reproduction procedure to be executed by the signal processing unit is similar to the content that has already been described using Figure 5B.

The flow illustrated in Figure 8 is different from the flow illustrated in Figure 5A described in the first embodiment, in that the flow illustrated in Figure 8 includes a step (S112) of discriminating whether the title to be reproduced by the reproduction unit 16 is the HDMV title or the BD-J title, and further determining whether or not the title whose reproduction is restarted is the BD-J title and this BD-J title is a title whose title-search reproduction is enabled by the user operation; and a step (S113) of, if the above requirement has been satisfied by this determination (S112: Yes), storing a reproduction state of a corresponding BD-J title (the register information 2), into the local storage 13.

Commands to reproduce the title include a title search command according to the user operation (UO), in addition to the Navigation Command. In the management information on the BD-ROM, information on whether or not it is allowed to perform title search for a specific title and directly reproduce the title has been described for each title.

For example, in the case where, during reproduction of a BD-J title #n, a pause of the reproduction occurs and the reproduction is restarted, this BD-J title #n can be a target of the resume reproduction if this BD-J title #n can be reproduced through the title search.

Accordingly, in the present embodiment, for the BD-J title that can be the target of the resume reproduction, the reproduction state of this title is stored in the local storage 13. If the title is returned, the Navigation Command of Jump Title or the title search is executed to start the resume reproduction.

According to the process based on the above flow, the restart of the resume reproduction from the beginning of the BD-J title is enabled, and the restart of the reproduction from proximity of the reproduction performed by the user is enabled even for the BD-J title whose resume reproduction is difficult.

It should be noted that, in the case of the transition from the BD-J title to the BD-J title, a BD-J application executes the title search. At this time, there are cases where the BD-J application is continuously retained, and where the BD-J application ends once. For example, it is assumed that transition from the BD-J title #n to a BD-J title #m has been performed, and during reproduction of the BD-J title #m, a pause of the reproduction has occurred. In such a case, the BD-J title #m is desirably reproduced from the beginning.

If the title #m is directly reproduced in a state where the BD-J application is continuously retained in the transition from the title #n to the title #m, the reproduction, however, may lapse into an unexpected operation.

Accordingly, the reproduction control unit 17 may have a function of, if the BD-J title is the title whose title-search reproduction is enabled by the user operation, and the reproduction of this BD-J title is due to the title transition through the title search by the BD-J application, executing state check of the BD-J application, and if it is determined that the application at the time of the title transition is retained, not instructing the reproduction unit to start the resume reproduction of this BD-J title.

Moreover, the reproduction control unit 17 may have a function of determining whether or not generation of a restoration parameter based on an AV stream number, a restoration segment ID and restoration byte code data is required for the reproduction of the BD-J title, and if the generation of this restoration parameter is required, not instructing the reproduction unit to start the resume reproduction of the above BD-J title.

Patent Literature 2 (Publication of WO2009/057298A1) discloses an invention of a disc reproduction apparatus that generates a restoration parameter by executing restoration byte code data that is an execution program recorded under the control of a BDPLS directory located immediately under the root directory, and uses it to restore a transformed AV stream to perform a reproduction process.

In the case of a BD-ROM for which a restoration byte code data execution unit used in the disc reproduction apparatus disclosed in Patent Literature 2 performs a process, the resume reproduction may not be able to be correctly performed without retaining a state of the restoration byte code data execution unit.

Accordingly, if the generation of the restoration parameter based on the AV stream number, the restoration segment ID and the restoration byte code data is required for the reproduction of the BD-J title, it is preferable not to instruct the reproduction unit to start the resume reproduction of the above BD-J title.

As described above, according to the present invention, in the restart of the resume reproduction, the Navigation Command is executed based on the register information stored in the nonvolatile storage unit. Thereby, the reproduction from a position expected by a content provider is enabled, and inconvenience such as incorrect display of a menu is avoided.

Moreover, even the resume reproduction of the BD-J title, which has been conventionally, technically difficult, is easily realized as the resume reproduction that restarts the reproduction from proximity of the position of the pause of the reproduction.

Each of the above described steps can be stored as a program on a recording medium, and can be executed by an information processing apparatus such as the disc reproduction apparatus.

### [Industrial Applicability]

As described above, the disc reproduction apparatus according to the present invention is useful as a disc reproduction apparatus that reproduces data recorded on a recording medium such as a BD-ROM disc.

### [Reference Signs List]

- 10: BD-ROM
- 11: pickup
- 12: servo
- 13: local storage
- 14: network interface
- 15: signal processing unit
- 16: reproduction unit
- 17: reproduction control unit
- 18: user operation unit
- 19: data processing unit
- 20: display control unit
- 100: disc reproduction apparatus

## Claims

1. A disc reproduction apparatus that reproduces a disc having multiple titles recorded thereon, the title being a unit of the reproduction, the apparatus comprising:
a signal processing unit that obtains various data recorded on the disc, and performs signal processing for the various data;
a reproduction unit that reproduces any of the multiple titles, from a reproduction start position indicated by the signal processing unit; and
a nonvolatile storage unit that stores information identifying the reproduction start position,
wherein the signal processing unit comprises:
a user operation unit that issues instructions to start the reproduction and pause the reproduction of each of the multiple titles, according to a user operation; and
a reproduction control unit that, each time a specific navigation command added to the title being reproduced by the reproduction unit is executed, sequentially stores a reproduction state at a timing of the execution of the command, into the nonvolatile storage unit, as executed command identification information, and also, if the title being reproduced by the reproduction unit is an HDMV movie title, sequentially stores a reproduction state of the HDMV movie title into the nonvolatile storage unit, as reproduction state information, and
wherein the reproduction control unit receives an instruction to restart the reproduction, from the user operation unit, and determines whether the information stored in the nonvolatile storage unit is the executed command identification information on the specific navigation command or the reproduction state information on the HDMV movie title; in a case of the reproduction state information, identifies the reproduction start position by the reproduction state information, and instructs the reproduction unit to start resume reproduction; and in a case of the executed command identification information, identifies the reproduction start position by the executed command identification information, and instructs the reproduction unit to start the resume reproduction.

2. The disc reproduction apparatus according to claim 1, wherein
the specific navigation command is any of Jump Title, Call Title, Resume, Play PL, Play PLatPI, Play PLatMK, Link PI and Link MK.

3. The disc reproduction apparatus according to claim 1, wherein
the reproduction control unit:
if the title whose reproduction is restarted according to the instruction from the user operation unit is an HDMV interactive title,
causes time search to be executed to a position of a leading graphic data packet in a playlist of the title whose reproduction start position has been identified by the executed command identification information, and for which the reproduction unit has been instructed to start the resume reproduction.

4. The disc reproduction apparatus according to claim 1, wherein
the reproduction control unit:
discriminates whether the title to be reproduced by the reproduction unit is an HDMV title or a BD-J title; and
if the title whose reproduction is restarted according to the instruction from the user operation unit is the BD-J title and the reproduction of the BD-J title is due to transition from the HDMV title, stores a reproduction state at a timing of executing a title transit command added to the HDMV title that is a transition source, into the nonvolatile storage unit, as the executed command identification information, identifies a beginning position of the BD-J title whose reproduction is restarted, as the reproduction start position, and instructs the reproduction unit to start the resume reproduction.

5. The disc reproduction apparatus according to claim 1, wherein the reproduction control unit:
discriminates whether the title to be reproduced by the reproduction unit is an HDMV title or a BD-J title; and
if the title whose reproduction is restarted according to the instruction from the user operation unit is the BD-J title, determines whether or not the BD-J title is a title whose title-search reproduction is enabled by the user operation, and in a case of the BD-J title whose title-search reproduction is enabled, sequentially stores a reproduction state of the BD-J title, into the nonvolatile storage unit, as the reproduction state information.

6. The disc reproduction apparatus according to claim 1, wherein
the reproduction control unit:
if the BD-J title is a title whose title-search reproduction is enabled by the user operation, and the reproduction of the BD-J title is due to title transition through title search by a BD-J application, executes state check of the BD-J application, and if an application at a time of the title transition is retained, does not instruct the reproduction unit to start the resume reproduction of the BD-J title.

7. The disc reproduction apparatus according to any one of claims 4 to 6, wherein
the reproduction control unit:
determines whether or not generation of a restoration parameter based on an AV stream number, a restoration segment ID and restoration byte code data is required for the reproduction of the BD-J title, and if the generation of the restoration parameter is required, does not instruct the reproduction unit to start the resume reproduction of the BD-J title.

8. A disc reproduction method for reproducing a disc having multiple titles recorded thereon, the title being a unit of the reproduction, the method comprising the steps of:
each time a specific navigation command added to a title being reproduced is executed, sequentially memorizing a reproduction state at a timing of the execution of the command, as executed command identification information, into a nonvolatile storage unit, and also, if the title being reproduced is an HDMV movie title, sequentially memorizing a reproduction state of the HDMV movie title, as reproduction state information, into the nonvolatile storage unit; and
when the reproduction is restarted according to a user operation that issues instructions to start the reproduction and pause the reproduction of each of the multiple titles, determining whether the information stored in the nonvolatile storage unit is the executed command identification information on the specific navigation command or the reproduction state information on the HDMV movie title; in a case of the reproduction state information, identifying a reproduction start position by the reproduction state information and starting resume reproduction; and in a case of the executed command identification information, identifying the reproduction start position by the executed command identification information and starting the resume reproduction.

9. The disc reproduction method according to claim 8, wherein
the specific navigation command is any of Jump Title, Call Title, Resume, Play PL, Play PLatPI, Play PLatMK, Link PI and Link MK.

10. The disc reproduction method according to claim 8, further comprising the step of:
if the title whose reproduction is restarted according to the instruction from the user operation is an HDMV interactive title, causing time search to be executed to a position of a leading graphic data packet in a playlist of the title whose reproduction start position has been identified by the executed command identification information, and for which an instruction to start the resume reproduction has been issued.

11. The disc reproduction method according to claim 8, further comprising the steps of:
discriminating whether the title to be reproduced is an HDMV title or a BD-J title; and
if the title whose reproduction is restarted according to the instruction from the user operation is the BD-J title and the reproduction of the BD-J title is due to transition from the HDMV title, memorizing a reproduction state at a timing of executing a title transit command added to the HDMV title that is a transition source, as the executed command identification information, identifying a beginning position of the BD-J title whose reproduction is restarted, as the reproduction start position, and issuing an instruction to start the resume reproduction.

12. The disc reproduction method according to claim 8, further comprising the steps of:
discriminating whether the title to be reproduced is an HDMV title or a BD-J title; and
if the title whose reproduction is restarted according to the instruction from the user operation is the BD-J title, determining whether or not the BD-J title is a title whose title-search reproduction is enabled by the user operation, and in a case of the BD-J title whose title-search reproduction is enabled, memorizing a reproduction state of the BD-J title.

13. The disc reproduction method according to claim 12, further comprising the step of:
if the BD-J title is the title whose title-search reproduction is enabled by the user operation, and the reproduction of the BD-J title is due to title transition through title search by a BD-J application, executing state check of the BD-J application, and if an application at a time of the title transition is retained, not instructing a reproduction unit to start the resume reproduction of the BD-J title.

14. The disc reproduction method according to any one of claims 11 to 13, further comprising the step of:
determining whether or not generation of a restoration parameter based on an AV stream number, a restoration segment ID and restoration byte code data is required for the reproduction of the BD-J title, and if the generation of the restoration parameter is required, inhibiting the resume reproduction of the BD-J title.

15. A program for causing an information processing apparatus to execute each of following steps to reproduce a disc having multiple titles recorded thereon, the title being a unit of the reproduction, the program comprising the steps of:
each time a specific navigation command added to a title being reproduced is executed, sequentially memorizing a reproduction state at a timing of the execution of the command, as executed command identification information, into a nonvolatile storage unit, and also, if the title being reproduced is an HDMV movie title, sequentially memorizing a reproduction state of the HDMV movie title, as reproduction state information, into the nonvolatile storage unit; and
when the reproduction is restarted according to a user operation that issues instructions to start the reproduction and pause the reproduction of each of the multiple titles, determining whether the information stored in the nonvolatile storage unit is the executed command identification information on the specific navigation command or the reproduction state information on the HDMV movie title; in a case of the reproduction state information, identifying a reproduction start position by the reproduction state information and starting resume reproduction; and in a case of the executed command identification information, identifying the reproduction start position by the executed command identification information and starting the resume reproduction.

16. The program according to claim 15, wherein
the specific navigation command is any of Jump Title, Call Title, Resume, Play PL, Play PLatPI, Play PLatMK, Link PI and Link MK.

17. The program according to claim 15, further comprising the following step of:
if the title whose reproduction is restarted according to the instruction from the user operation is an HDMV interactive title, causing time search to be executed to a position of a leading graphic data packet in a playlist of the title whose reproduction start position has been identified by the executed command identification information, and for which an instruction to start the resume reproduction has been issued.

18. The program according to claim 15, further comprising the following steps of:
discriminating whether the title to be reproduced is an HDMV title or a BD-J title; and
if the title whose reproduction is restarted according to the instruction from the user operation is the BD-J title and the reproduction of the BD-J title is due to transition from the HDMV title, memorizing a reproduction state at a timing of executing a title transit command added to the HDMV title that is a transition source, as the executed command identification information, identifying a beginning position of the BD-J title whose reproduction is restarted, as the reproduction start position, and issuing an instruction to start the resume reproduction.

19. The program according to claim 18, further comprising the following steps of:
discriminating whether the title to be reproduced is the HDMV title or the BD-J title; and
if the title whose reproduction is restarted according to the instruction from the user operation is the BD-J title, determining whether or not the BD-J title is a title whose title-search reproduction is enabled by the user operation, and in a case of the BD-J title whose title-search reproduction is enabled, memorizing a reproduction state of the BD-J title.

20. The program according to claim 19, further comprising the following step of:
if the BD-J title is the title whose title-search reproduction is enabled by the user operation, and the reproduction of the BD-J title is due to title transition through title search by a BD-J application, executing state check of the BD-J application, and if an application at a time of the title transition is retained, not instructing a reproduction unit to start the resume reproduction of the BD-J title.

21. The program according to any one of claims 18 to 20, further comprising the following step of:
determining whether or not generation of a restoration parameter based on an AV stream number, a restoration segment ID and restoration byte code data is required for the reproduction of the BD-J title, and if the generation of the restoration parameter is required, inhibiting the resume reproduction of the BD-J title.
